# FASCICULE DE BREVET EUROPEEN

(11) **EP 2 580 905 B1**
(45) Date de publication et mention de la délivrance du brevet: **16.07.2014**
(21) Numéro de dépôt: 11725985.3
(22) Date de dépôt: 26.05.2011
(51) Int. Cl.: H04L 29/08

(54) **PROCÉDÉ DE COLLECTE DE RENSEIGNEMENTS D'UN RÉSEAU PAIR À PAIR**
VERFAHREN ZUR ERFASSUNG VON EPRSÖNLICHEN DATEN EINES PEER-TO-PEER-NETZES
METHOD OF COLLECTING PARTICULARS OF A PEER-TO-PEER NETWORK

(30) Priorité: 08.06.2010 FR 1054510
(43) Date de publication de la demande: 17.04.2013
(73) Titulaire: Trident Media Guard TMG, 44230 St Sebastien Sur Loire (FR)
(72) Inventeur: ROUIBIA, Soufiane, F-44300 Nantes (FR); CASALTA, Bastien, F-44000 Nantes (FR)
(74) Mandataire: Nony
(86) Numéro de dépôt international: PCT/IB2011/052298
(87) Numéro de publication internationale: WO 2011/154864

(56) Documents cités:
- WO-A2-02/15035
- US-A1- 2004 088 347
- US-A1- 2009 100 128

## Description

La présente invention concerne un procédé et un dispositif de collecte de renseignements relatifs à des pairs d'un réseau pair à pair échangeant un contenu dans ledit réseau.

Un tel réseau pair à pair est par exemple le réseau BitTorrent, e-Donkey, Ares, Gnutella1, Gnutella2...

Les nouvelles générations de réseaux pair à pair font intervenir des systèmes répartis permettant l'identification et l'obtention d'informations dans le réseau pair à pair. Ces systèmes répartis reposent sur la création d'un réseau de recouvrement du réseau pair à pair. Dans ce réseau de recouvrement, chaque noeud est identifié et peut communiquer avec les autres noeuds. Le réseau de recouvrement met par exemple en oeuvre une table de hachage distribuée, que l'on désignera par la suite par son acronyme anglais « DHT », et qui est décrite par exemple dans la publication RIPEANU, FOSTER « Mapping the Gnutella Network : Macroscopic Properties of Large-Scale Peer-to-Peer Systems ».

Grace à l'emploi d'une DHT, chaque pair du réseau pair à pair devient un mini-annuaire.

Les réseaux pair à pair mettent également en oeuvre la technique Peer Exchange, par laquelle chaque pair échange avec les pairs auxquels il vient de se connecter les coordonnées dans le réseau des pairs qu'il connait et qui distribuent le même contenu. Cet échange est effectué juste après le premier message de connexion.

Les pairs du réseau pair à pair cherchant à télécharger un contenu dans le réseau pair à pair récupèrent généralement une liste de pairs intéressés par le même contenu auprès d'un annuaire central du réseau. Pour être servi le plus rapidement possible, chaque pair cherche à accroître cette liste de pairs.

La technique Peer Exchange ou l'interrogation d'une DHT permettent d'atteindre cet objectif. Comme autres avantages, l'emploi d'une DHT ou la technique Peer Exchange permet d'utiliser la bande passante des pairs du réseau qui téléchargent pour la recherche de pairs et d'informations sur des contenus présents dans le réseau, au lieu d'utiliser la bande passante du serveur.

Néanmoins, les informations ainsi récupérées ne sont pas toujours fiables. En effet, certains pairs peuvent diffuser via la DHT ou par envoi d'adresses selon la technique Peer Exchange des adresses erronées intentionnellement ou non, ces adresses ne correspondant pas à des pairs du réseau parce qu'elles n'existent pas, parce qu'il s'agit d'adresses d'imprimantes ou encore parce qu'il s'agit d'adresses de serveurs n'ayant rien à voir avec le réseau pair à pair.

Il peut s'avérer difficile de vérifier l'exactitude de ces adresses pour plusieurs raisons : la connexion à chacune de ces adresses pour vérifier son existence est coûteuse en temps et en ressources. En outre, certaines adresses, bien qu'existant, peuvent ne pas répondre à une tentative de connexion pour des raisons telles que le fait que les terminaux informatiques correspondants aient déjà entrepris le nombre maximal de connexions qu'ils peuvent supporter. En outre, certaines adresses correspondent à des pairs filtrés, par exemple protégés par un pare-feu, qui ne peuvent être atteints si la connexion n'est pas engagée par ces derniers.

Il s'avère en conséquence difficile de collecter des renseignements quant aux pairs d'un réseau pair à pair, ces renseignements ayant par exemple pour but de réaliser des études statistiques sur les volumes de téléchargement et le nombre de copies de certains contenus présentes sur les réseaux pair à pair ou pour but d'empêcher le téléchargement illicite par des pairs d'un réseau pair à pair d'oeuvres protégées par des droits de propriété intellectuelle.

Un exemple de collection de renseignement dans un réseau pair à pair est divulgué par le document d'art antérieure US 2009/0100128.

Il existe par conséquent un besoin pour collecter des renseignements relatifs à des pairs d'un réseau pair à pair d'une façon fiable et relativement simple à mettre en oeuvre.

L'invention a pour but de répondre à ce besoin et y parvient, selon l'un de ses aspects, grâce à un procédé de collecte de renseignements relatifs à des pairs d'un réseau pair à pair, le réseau comportant au moins un pair exécutant un logiciel d'échange configuré pour diffuser des données vers au moins un client selon un protocole d'échange sélectif permettant au pair d'opérer une sélection des clients vers lesquels des données sont transférées, cette sélection s'effectuant en fonction d'une ou plusieurs caractéristiques des clients,
procédé dans lequel :
- on recherche :
   - au moins un noeud-annuaire d'un réseau de recouvrement dudit réseau pair à pair, ledit noeud-annuaire étant associé à au moins une information prédéfinie,
      et/ou
   - au moins un noeud-annuaire du réseau pair à pair, ledit noeud-annuaire étant associé à ladite information prédéfinie et répertoriant des pairs du réseau pair à pair,
- on envoie audit noeud-annuaire du réseau de recouvrement et/ou auxdits pairs du réseau répertoriés par le noeud-annuaire du réseau pair à pair l'adresse dans le réseau pair à pair d'au moins un client contrôlé, de façon à permettre la connexion d'au moins un pair du réseau pair à pair audit client contrôlé et,
- on reçoit par l'intermédiaire du client contrôlé auquel au moins un pair du réseau est connecté des renseignements relatifs audit pair connecté.

L'envoi à un ou plusieurs noeuds-annuaires du réseau de recouvrement et/ou aux pairs du réseau répertoriés par le noeud-annuaire du réseau pair à pair de l'adresse dans le réseau pair à pair d'au moins un client contrôlé permet la diffusion rapide dans le réseau pair à pair de l'adresse du client contrôlé.

Grace à l'invention, des pairs du réseau ayant récupéré l'adresse du client contrôlé se connectent à ce dernier. On peut ainsi s'assurer que les adresses récupérées par le client contrôlé du fait de ces connexions correspondent à de véritables pairs du réseau.

Du fait que ce soient les pairs du réseau pair à pair qui se connectent au client contrôlé, lorsque ces pairs sont filtrés par un pare-feu, une communication peut avoir lieu avec ces pairs et l'on peut profiter de ces communications pour vérifier les adresses de ces pairs, ce qui renforce encore la fiabilité des renseignements collectés.

L'invention peut être mise en oeuvre dans un but informatif, c'est-à-dire pour savoir quels sont les contenus les plus téléchargés et les plus reproduits dans le réseau pair à pair.

L'invention peut aussi être mise en oeuvre dans un but répressif, afin de déterminer quels sont les pairs du réseau pair à pair qui téléchargent illégalement du contenu protégé par des droits de propriété intellectuelle.

Le réseau pair à pair peut être décentralisé et l'on peut rechercher au moins un noeud-annuaire du réseau de recouvrement du réseau pair à pair associé à au moins une information prédéfinie puis envoyer audit noeud-annuaire l'adresse dans le réseau pair à pair d'au moins un client contrôlé. Cette adresse du client contrôlé peut être envoyée audit noeud-annuaire et être présentée comme associée à ladite information prédéfinie.

On peut ainsi s'assurer de la publication de l'adresse du client contrôlé dans le réseau de recouvrement, de manière à ce que l'adresse du client contrôlé soit communiquée aux pairs contactant le noeud-annuaire du réseau de recouvrement et intéressés par ladite information prédéfinie.

On peut rechercher au moins un noeud-annuaire du réseau pair à pair associé à ladite information prédéfinie et répertoriant des pairs du réseau pair à pair et l'on peut envoyer aux pairs répertoriés par ce noeud-annuaire l'adresse dans le réseau pair à pair d'au moins un client contrôlé. Cette adresse du client contrôlé peut être envoyée audit noeud-annuaire et être présentée comme associée à ladite information prédéfinie.

Grâce au procédé selon l'invention, l'adresse du client contrôlé est envoyée à des pairs intéressés par ladite information.

L'information prédéfinie comprend par exemple l'un au moins parmi un identifiant d'un contenu diffusé ou à diffuser dans le réseau pair à pair, comme par exemple un hash d'un fichier, un titre d'album, ou de film, ou à une adresse, notamment une adresse IP d'un pair dans le réseau pair à pair.

Les renseignements reçus par le client contrôlé lorsqu'un pair se connecte à ce dernier peuvent comprendre, en plus de son adresse, un identifiant du contenu et/ou le pourcentage du contenu déjà téléchargé par ce pair.

Les renseignements reçus par le client contrôlé lorsqu'un pair se connecte à ce dernier peuvent comprendre en outre la version du logiciel d'échange dudit pair, les options qu'il supporte et/ou un hash dudit pair.

Le logiciel d'échange exécuté par le pair peut être du type BitTorrent, eDonkey, Ares, Gnutella1, Gnutella2.

Le réseau de recouvrement peut mettre en oeuvre une table de hachage distribuée et le noeud-annuaire du réseau de recouvrement associé à l'information prédéfmie peut être un traqueur interne associé à ladite information.

Dans cet exemple, l'adresse dans le réseau pair à pair d'un client contrôlé peut être communiquée au traqueur interne, de manière à ce que des pairs du réseau pair à pair puissent récupérer cette adresse auprès du traqueur interne pour se connecter au client contrôlé.

L'annuaire du réseau pair à pair peut être un traqueur associé à l'information prédéfinie, et la liste de pairs répertoriés par ce dernier comme associés à l'information prédéfinie peut être récupérée auprès de ce dernier.

Une connexion peut être effectuée avec tout ou partie des pairs de la liste récupérée auprès du traqueur et l'adresse dans le réseau pair à pair d'au moins un client contrôlé, notamment selon la technique Peer Exchange, peut être envoyée au(x)dit(s) pair(s).

Après réception de la liste de pairs et envoi auxdits pairs de la liste de l'adresse du client contrôlé, les connexions avec lesdits pairs peuvent être interrompues.

L'adresse dans le réseau du client contrôlé peut comporter l'adresse IP et/ou le port du client contrôlé.

L'invention a encore pour objet, selon un autre de ses aspects, un procédé pour ralentir, voire éliminer, la propagation illégale de données protégées dans un réseau pair à pair, le réseau comportant au moins un pair exécutant un logiciel d'échange configuré pour diffuser des données vers au moins un client selon un protocole d'échange sélectif permettant au pair d'opérer une sélection des clients vers lesquels des données sont transférées, cette sélection s'effectuant en fonction d'une ou plusieurs caractéristiques des clients, dans lequel :
- on met en oeuvre le procédé de collecte de renseignements tel que défini ci-dessus, l'information prédéfinie étant un contenu numérique audio, photo ou vidéo et,
- en fonction du logiciel d'échange exécuté par le pair, le client contrôlé envoie au(x) pairs au(x)quel(s) il est connecté un message s'opposant à ladite propagation. Ce message peut être une fausse information relative audit contenu recherché, notamment un message de non-existence dudit contenu dans le réseau pair à pair.

Le procédé permet ainsi d'empêcher la diffusion du contenu dans le réseau en faisant par exemple croire au pair souhaitant le télécharger que ce contenu n'existe pas.

L'invention a encore pour objet, selon un autre de ses aspects, un système informatique destiné à collecter des renseignements sur des pairs d'un réseau pair à pair, réseau pair à pair dans lequel au moins un pair exécute un logiciel d'échange configuré pour diffuser des données vers au moins un client selon un protocole d'échange sélectif permettant au pair d'opérer une sélection des clients vers lesquels les données sont transférées, cette sélection s'effectuant en fonction de données représentatives d'une ou plusieurs caractéristiques des clients, le système informatique comportant au moins un client contrôlé et étant configuré pour :
- rechercher au moins un noeud-annuaire d'un réseau de recouvrement dudit réseau pair à pair, ledit noeud-annuaire étant associé à au moins une information prédéfinie et/ou au moins un noeud-annuaire du réseau pair à pair, ledit noeud-annuaire étant associé à ladite information prédéfinie et répertoriant des pairs du réseau pair à pair,
- envoyer au noeud-annuaire du réseau de recouvrement et/ou aux pairs du réseau pair à pair répertoriés par le noeud-annuaire du réseau pair à pair l'adresse dans le réseau pair à pair d'au moins un client contrôlé, de façon à permettre la connexion d'au moins un pair du réseau pair à pair audit client contrôlé et,
- recevoir par l'intermédiaire du client contrôlé auquel au moins un pair du réseau est connecté des renseignements relatifs audit pair connecté.

L'invention a encore pour objet, selon un autre de ses aspects, un produit programme d'ordinateur comportant des instructions lisibles par un système informatique comportant au moins un microprocesseur, ces instructions commandant le fonctionnement du système informatique de manière à ce que, dans un réseau pair à pair comportant au moins un pair exécutant un logiciel d'échange configuré pour servir au moins un client selon un protocole d'échange sélectif permettant au pair d'effectuer une sélection des clients servis en fonction d'au moins une caractéristique de ces clients :
- au moins un noeud-annuaire d'un réseau de recouvrement dudit réseau pair à pair soit recherché, ledit noeud-annuaire étant associé à au moins une information prédéfinie, et/ou au moins un noeud-annuaire du réseau pair à pair soit recherché, ledit noeud-annuaire étant associé à ladite information prédéfmie et répertoriant des pairs du réseau pair à pair,
- l'adresse dans le réseau pair à pair d'au moins un client contrôlé soit envoyée au noeud-annuaire du réseau de recouvrement et/ou aux pairs du réseau répertoriés par le noeud-annuaire du réseau pair à pair, de façon à permettre la connexion d'au moins un pair du réseau pair à pair audit client contrôlé et,
- le client contrôlé auquel au moins un pair du réseau est connecté reçoive des renseignements relatifs audit pair connecté.

L'invention pourra être mieux comprise à la lecture de la description qui va suivre d'exemples non limitatifs de mise en oeuvre de celle-ci, et à l'examen du dessin annexé, sur lequel :
- la figure 1 représente de façon schématique une architecture informatique dans laquelle l'invention peut être mise en oeuvre,
- la figure 2 est un diagramme des tâches d'un intrus pour réseau de recouvrement d'un réseau pair à pair selon l'invention,
- la figure 3 est un diagramme des tâches d'un intrus pour réseau pair à pair et,
- la figure 4 est un diagramme des tâches d'un client contrôlé selon l'invention.

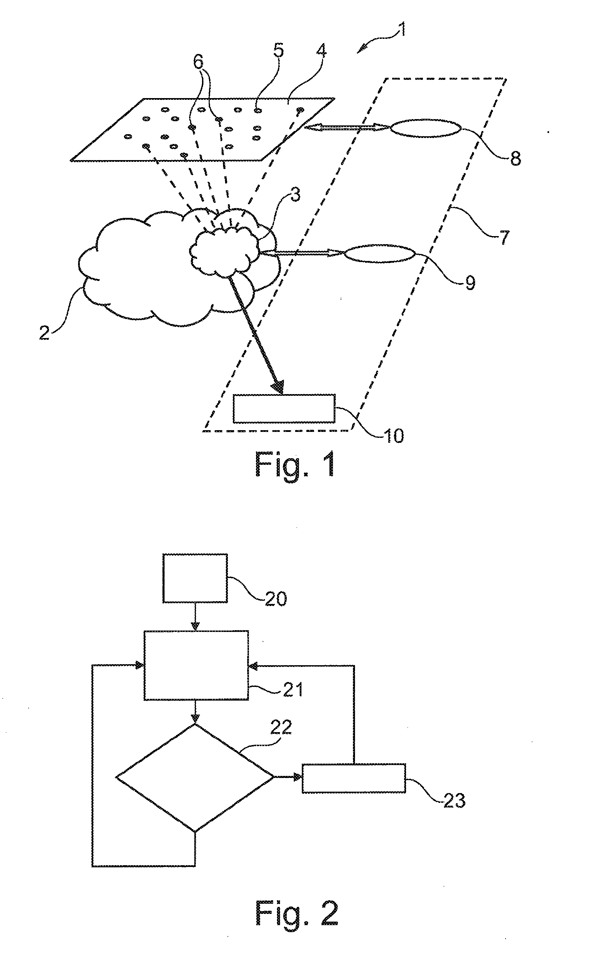

On a représenté à la figure 1, de façon schématique, une architecture informatique 1 dans laquelle peut être mise en oeuvre l'invention.

L'architecture informatique 1 comprend un réseau pair à pair 2 comportant au moins un pair exécutant un logiciel d'échange configuré pour diffuser des données vers au moins un client selon un protocole d'échange sélectif permettant au pair d'opérer une sélection des clients vers lesquels des données sont transférées, cette sélection s'effectuant en fonction d'une ou plusieurs caractéristiques des clients. Dans l'exemple des figures 1 à 4, le réseau 2 est un réseau pair à pair décentralisé du type BitTorrent, mais l'invention n'est pas limitée à ce type de réseau pair à pair.

Des contenus peuvent être échangés dans le réseau pair à pair 2.

Il s'agit par exemple de fichiers audio, par exemple de format *.wav, *.aif, *.caf, *.cda, *.atrac, *.omg, *.at3, *.oga, *.flsc, *.mp3, *.ogg, *.vqf, *.vql, *.vqe, *.wma, *.au, *.aac, *.mp4, *.m4a.

Il peut s'agir de fichiers vidéo de format *.arr, *.mpg, *.mov, *.esf, *.wmv, *.dvx, *.qt, *.avi entre autres.

Il peut encore s'agir d'images sous format *.jpg, *.bmp, *.bng, *.tif, *.eps.

Il peut également s'agir de contenus archivés de format *.zip, *.rar ou de livres électroniques sous format *.pdf ou autres.

Le réseau 2 comporte une pluralité de pairs dont certains sont des pairs cibles 3 qui sont intéressés par un même contenu présent dans le réseau 2 et associés à une information prédéfinie. L'information prédéfinie est par exemple le contenu à distribuer ou un identifiant dudit contenu, un hash de fichier, un titre d'album ou de film.

Un réseau de recouvrement 4 du réseau pair à pair 2 peut être prévu. Il s'agit dans l'exemple considéré d'une table de hachage distribuée (DHT).

Ce réseau de recouvrement 4 comporte une pluralité de noeuds 5. Parmi ces noeuds 5, certains noeuds 6 sont des noeuds-annuaires pour l'information prédéfinie. Les pairs cibles 3 sont susceptibles de contacter ces noeuds-annuaires 6 lorsqu'ils souhaitent télécharger le contenu associé à l'information prédéfinie.

Comme représentée à la figure 1, l'architecture 1 comprend un système informatique 7 destiné à collecter des renseignements sur les pairs 3 du réseau pair à pair 2.

Ce système informatique 7 comprend par exemple au moins un intrus 8 configuré pour interagir avec le réseau de recouvrement 4, au moins un intrus 9 configuré pour interagir avec le réseau pair à pair 2, ainsi qu'au moins un client contrôlé 10 au(x)quel(s) des pairs cibles 3 peuvent se connecter.

La figure 2 est un diagramme des tâches exécutées par un intrus 8 selon un exemple de mise en oeuvre de l'invention.

Cet intrus 8 est configuré pour rechercher dans le réseau de recouvrement 4 les noeuds-annuaires 6 associés à l'information prédéfinie, ces noeuds-annuaires 6 étant des traqueurs internes dans l'exemple décrit. L'information prédéfinie est dans l'exemple considéré le hash du contenu à télécharger.

Lorsque l'intrus 8 a pu rentrer en contact avec ces traqueurs internes 6, il leur communique l'adresse, par exemple l'adresse IP et le port du client contrôlé 10.

Les pairs cibles 3 du réseau pair à pair 2 recherchant l'information prédéfinie et cherchant à connaitre le plus de pairs 3 intéressés par la même information contacteront un ou plusieurs traqueurs internes 6 et récupéreront de ces derniers l'adresse dans le réseau pair à pair du client contrôlé 10.

Lors d'une étape 20, l'intrus 8 recherche un point d'accès au réseau de recouvrement 4.

Il se connecte pour ce faire à tout pair du réseau pair à pair 2 connecté au réseau de recouvrement 4.

Dans l'exemple illustré, un seul intrus 8 est utilisé mais, afin de répandre plus rapidement l'adresse du client contrôlé 10, plusieurs intrus 8 peuvent être utilisés.

Lors de l'étape 21, l'intrus 8 qui a rejoint le réseau de recouvrement 4 cherche les noeuds 5 du réseau de recouvrement 4 proches de l'information prédéfinie recherchée. Lors de cette étape 21, qui est classique en présence d'une DHT, l'intrus 8 récupère une liste de noeuds du réseau de recouvrement 4.

Lors de l'étape 22, l'intrus 8 demande au noeud le plus proche de l'information prédéfinie s'il est annuaire pour ladite information, autrement dit s'il s'agit d'un traqueur interne 6 pour ladite information prédéfinie. Dans l'affirmative, l'intrus 8 informe à une étape 23 de l'adresse IP et du port du client contrôlé 10 ce traqueur interne 6, de manière à ce que cette adresse soit publiée sur le réseau de recouvrement 4 et soit ainsi communiquée par les traqueurs internes 6 aux pairs cibles 3 lorsque ces derniers interrogent des traqueurs internes 6 pour télécharger le contenu associé à ladite information prédéfinie.

Dans la négative, ou après avoir exécuté l'étape 23, l'intrus 8 retourne à l'étape 21.

L'invention peut également mettre en oeuvre un ou plusieurs intrus 9 configurés pour interagir avec le réseau pair à pair 2.

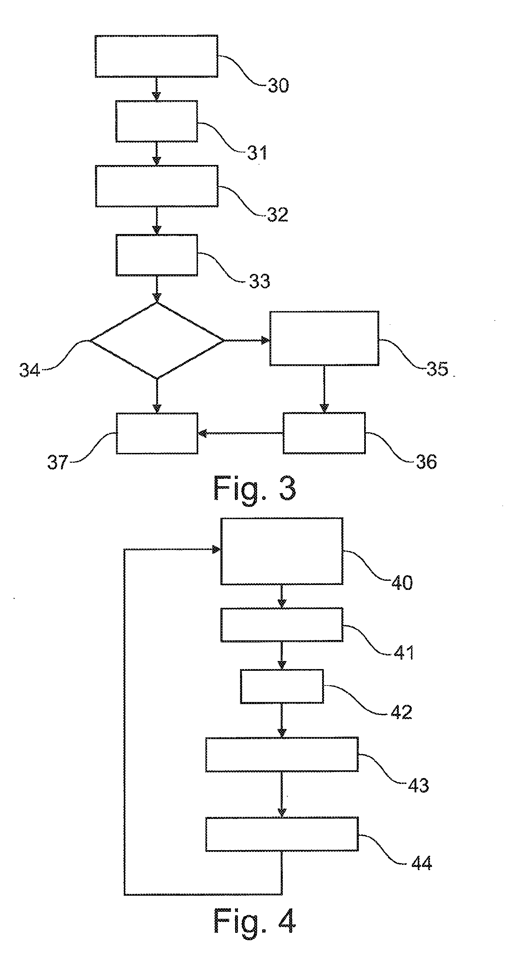

Un intrus 9 peut fonctionner selon le diagramme représenté à la figure 3.

Lors d'une première étape 30, cet intrus 9 récupère le fichier .torrent du contenu associé à l'information prédéfinie, ce fichier lui permettant à une étape 31 de se connecter au traqueur du réseau pair à pair 2.

Lors d'une étape 32, l'intrus 9 récupère du traqueur une première liste de pairs 3 associés à l'information prédéfinie.

Lors d'une étape 33, l'intrus 9 se connecte à chacun des pairs 3 figurant dans la liste qu'il vient de recevoir et va analyser les options supportées par chacun desdits pairs lors d'une étape 34.

Si le pair met en oeuvre la technique Peer Exchange, l'intrus 9 et le pair s'envoient mutuellement lors d'une étape 35 les adresses IP et le port des pairs qu'ils répertorient autour du même contenu à télécharger. Lors de cette étape 35, l'intrus 9 peut se contenter d'envoyer au pair 3 l'adresse IP et le port du client contrôlé.

Lors d'une étape 36, les adresses renvoyées par le pair 3 sont enregistrées par l'intrus 9 et ajoutées à sa liste de contacts.

A l'issue de cette étape 36 ou lorsque l'intrus 9 constate que le pair 2 ne met pas en oeuvre la technique Peer Exchange, la connexion avec le pair 2 est interrompue à une étape 37.

Un exemple de fonctionnement d'un client contrôlé 10 va maintenant être décrit en référence à la figure 4. Le client contrôlé 10 peut par exemple être un simple serveur susceptible de se connecter au réseau pair à pair 2. Ce serveur est par exemple configuré pour écouter sur l'adresse IP et le port publié par les intrus 8 et 9 précédemment décrits.

Tous les pairs cibles 3 du réseau pair à pair 2 ayant récupéré l'adresse et le port du client contrôlé 10 via les traqueurs internes 6 du réseau de recouvrement ou via les intrus 9 vont pouvoir se connecter au client contrôlé 10.

Lors d'une étape 42, les informations reçues par le client contrôlé du fait de la connexion des pairs cibles 3, comme par exemple l'adresse des pairs, le logiciel d'échange des pair, les options supportées par les pairs ou encore le hash des pairs, le hash du contenu et le pourcentage du contenu déjà téléchargé par les pairs 3, peuvent être analysées par le client contrôlé 10, ce qui permet de s'assurer que l'adresse reçue lors de la connexion correspond véritablement à un pair exécutant le logiciel d'échange, de type BitTorrent dans l'exemple considéré.

A l'étape 43, ces informations sont enregistrées dans une base de données.

Lorsque l'invention s'applique à la lutte contre la propagation illégale de données protégées par des droits de propriété intellectuelle, le client contrôlé peut exécuter une étape 44 selon laquelle, en fonction du logiciel d'échange, par exemple BitTorrent, eDonkey, Ares, Gnutella1 ou Gnutella2, il envoie au pair cible 3 un message comprenant une fausse information relative audit contenu, notamment un message de non existence du contenu recherché par ce dernier.

L'invention n'est pas limitée aux exemples qui viennent d'être décrits.

L'expression «comportant un» doit être comprise comme signifiant « comportant au moins un », sauf lorsque le contraire est spécifié.

## Revendications

1. Procédé de collecte de renseignements relatifs à des pairs (3) d'un réseau pair à pair (2), le réseau (2) comportant au moins un pair (3) exécutant un logiciel d'échange configuré pour diffuser des données vers au moins un client selon un protocole d'échange sélectif permettant au pair d'opérer une sélection des clients vers lesquels des données sont transférées, cette sélection s'effectuant en fonction d'une ou plusieurs caractéristiques des clients,
procédé dans lequel :
- on recherche :
- au moins un noeud-annuaire (6) d'un réseau de recouvrement (4) dudit réseau pair à pair (4), ledit noeud-annuaire (6) étant associé à au moins une information prédéfinie,
et
- au moins un noeud-annuaire du réseau pair à pair (2), ledit noeud-annuaire étant associé à ladite information prédéfinie et répertoriant des pairs (3) du réseau pair à pair,
- on envoie au noeud-annuaire (6) du réseau de recouvrement (4) et aux pairs (3) du réseau pair à pair répertoriés par le noeud-annuaire du réseau pair à pair (2) l'adresse dans le réseau pair à pair d'au moins un client contrôlé (10), de façon à permettre la connexion d'au moins un pair (3) du réseau pair à pair (2) audit client contrôlé (10) et,
- on reçoit par l'intermédiaire du client contrôlé (10) auquel au moins un pair (3) du réseau est connecté des renseignements relatifs audit pair connecté.

2. Procédé selon la revendication 1, dans lequel le réseau pair à pair (2) est décentralisé et dans lequel on recherche au moins un noeud-annuaire (6) du réseau de recouvrement (4) du réseau pair à pair (2) associé à ladite information prédéfinie et dans lequel on envoie audit noeud-annuaire (6) l'adresse dans le réseau pair à pair (2) d'au moins un client contrôlé (10).

3. Procédé selon la revendication 1 ou 2, dans lequel on recherche au moins un noeud-annuaire du réseau pair à pair (2) associé à ladite information prédéfinie et répertoriant des pairs (3) du réseau pair à pair, et dans lequel on envoie aux pairs répertoriés l'adresse dans le réseau pair à pair (2) d'au moins un client contrôlé (10).

4. Procédé selon l'une quelconque des revendications précédentes, dans lequel l'information prédéfinie comprend l'un au moins parmi un identifiant d'un contenu diffusé ou à diffuser dans le réseau pair à pair (2) et une adresse d'un pair (3) dans le réseau pair à pair (2), l'information prédéfinie comprenant de préférence un identifiant d'un contenu numérique audio et/ou vidéo.

5. Procédé selon la revendication précédente, dans lequel les renseignements reçus par le client contrôlé (10) comprennent un identifiant du contenu numérique et/ou le pourcentage dudit contenu déjà téléchargé par le pair (3) auquel le client contrôlé (10) est connecté.

6. Procédé selon l'une quelconque des revendications précédentes, dans lequel les renseignements reçus par le client contrôlé (10) comprennent un identifiant du pair (3) auquel il est connecté et/ou la version du logiciel d'échange dudit pair.

7. Procédé selon la revendication 2, dans lequel le réseau de recouvrement (4) met en oeuvre une table de hachage distribuée (Distributed Hash Table) et dans lequel le noeud-annuaire (6) associé à l'information prédéfinie est un traqueur interne associé à ladite information.

8. Procédé selon la revendication précédente, dans lequel on communique au traqueur interne (6) l'adresse dans le réseau pair à pair (2) d'un client contrôlé (10), de manière à ce que des pairs (3) du réseau pair à pair (2) puissent récupérer cette adresse auprès du traqueur interne (6) pour se connecter au client contrôlé (10).

9. Procédé selon la revendication 7 ou 8, dans lequel le noeud-annuaire du réseau pair à pair (2) est un traqueur associé à l'information prédéfinie et dans lequel on récupère auprès de ce traqueur la liste des pairs (3) du réseau répertoriés par ce dernier comme associés à l'information prédéfinie, et dans lequel on se connecte à l'un au moins desdits pairs (3).

10. Procédé selon la revendication précédente, dans lequel on reçoit, d'au moins un pair (3) de la liste récupérée auprès du traqueur et auquel on s'est connecté, une liste de pairs (3) du réseau pair à pair, et dans lequel on envoie audit pair (3) l'adresse dans le réseau pair à pair (2) d'au moins un client contrôlé (10), notamment selon la technique Peer exchange.

11. Procédé selon la revendication précédente, dans lequel après réception de la liste de pairs (3) et envoi audit pair (3) de l'adresse du client contrôlé (10), on se déconnecte dudit pair.

12. Procédé selon l'une quelconque des revendications précédentes, dans lequel l'adresse dans le réseau pair à pair (2) du client contrôlé (10) comprend l'adresse IP et le port du client contrôlé (10).

13. Procédé pour ralentir, voire éliminer, la propagation illégale de données protégées dans un réseau pair à pair (2), le réseau (2) comportant au moins un pair (3) exécutant un logiciel d'échange configuré pour diffuser des données vers au moins un client selon un protocole d'échange sélectif permettant au pair d'opérer une sélection des clients vers lesquels des données sont transférées, cette sélection s'effectuant en fonction d'une ou plusieurs caractéristiques des clients, dans lequel :
- on met en oeuvre le procédé de collecte de renseignements selon l'une quelconque des revendications 1 à 12, l'information prédéfinie étant un contenu numérique audio et/ou vidéo et,
- en fonction du logiciel d'échange exécuté par le pair (3), le client contrôlé (10) envoie au(x) pair(s) (3) auquel(s) il est connecté un message s'opposant à ladite propagation, notamment une fausse information relative audit contenu recherché, tel qu'un message de non-existence dudit contenu dans le réseau pair à pair (2).

14. Système informatique (7) destiné à collecter des renseignements sur des pairs (3) d'un réseau pair à pair (2), dans lequel au moins un pair (3) exécute un logiciel d'échange configuré pour diffuser des données vers au moins un client selon un protocole d'échange sélectif permettant au pair d'opérer une sélection des clients vers lesquels les données sont transférées, cette sélection s'effectuant en fonction de données représentatives d'une ou plusieurs caractéristiques des clients,
le système informatique (7) comportant au moins un client contrôlé (10) et étant configuré pour :
- rechercher au moins un noeud-annuaire (6) d'un réseau de recouvrement (4) dudit réseau pair à pair (2), ledit noeud-annuaire (6) étant associé à au moins une information prédéfinie et au moins un noeud-annuaire du réseau pair à pair (2), ledit noeud-annuaire étant associé à ladite information prédéfinie et répertoriant des pairs (3) du réseau pair à pair,
- envoyer au noeud-annuaire (6) du réseau de recouvrement (4) et aux pairs du réseau (2) répertoriés par le noeud-annuaire du réseau pair à pair l'adresse dans le réseau pair à pair d'au moins un client contrôlé (10), de façon à permettre la connexion d'au moins un pair (3) du réseau pair à pair audit client contrôlé (10) et,
- recevoir par l'intermédiaire du client contrôlé (10) auquel au moins un pair (3) du réseau (2) est connecté des renseignements relatifs audit pair connecté.

15. Produit programme d'ordinateur comportant des instructions lisibles par un système informatique (7) comportant au moins un microprocesseur, ces instructions commandant le fonctionnement du système informatique (7) de manière à ce que, dans un réseau pair à pair (2) comportant au moins un pair (3) exécutant un logiciel d'échange configuré pour servir au moins un client selon un protocole d'échange sélectif permettant au pair d'effectuer une sélection des clients servis en fonction d'au moins une caractéristique de ces clients :
- au moins un noeud-annuaire (6) d'un réseau de recouvrement (4) dudit réseau pair à pair (2) soit recherché, ledit noeud-annuaire (6) étant associé à au moins une information prédéfinie, et au moins un noeud-annuaire du réseau pair à pair (2) soit recherché, ledit noeud-annuaire étant associé à ladite information prédéfinie et répertoriant des pairs (3) du réseau pair à pair (2),
- l'adresse dans le réseau pair à pair (2) d'au moins un client contrôlé (10) soit envoyée au noeud-annuaire (6) du réseau de recouvrement (4) et aux pairs (3) du réseau (2) répertoriés par le noeud-annuaire du réseau pair à pair, de façon à permettre la connexion d'au moins un pair (3) du réseau pair à pair audit client contrôlé (10) et,
- le client contrôlé (10) auquel au moins un pair (3) du réseau (2) est connecté reçoive des renseignements relatifs audit pair connecté (3).

## Patentansprüche

1. Verfahren zum Sammeln von Angaben in Bezug auf Peers (3) eines Feer-to-Peer-Netzwerks (2), wobei das Netzwerk (2) mindestens einen Peer (3) umfasst, der ein Austauschprogramm ausführt, das zum Verteilen von Daten an mindestens einen Client gemäß einem selektiven Austauschprotokoll eingerichtet ist, das es dem Peer ermöglicht, eine Auswahl von Clients auszuführen, an die die Daten zu übertragen sind, wobei diese Auswahl von einer oder mehreren charakteristischen Eigenschaften der Clients abhängt,
wobei im Verfahren:
gesucht wird:
mindestens ein Knotenverzeichnis (6) eines Overlay-Netzwerks (4) des Peer-to-Peer-Netzwerks (4), wobei das Knotenverzeichnis (6) mit mindestens einer vorgegebenen Information assoziiert ist, und
mindestens ein Knoterverzeichnis des Peer-to-Peer-Netzwerks (2), wobei das Knotenverzeichnis mit der vorgegebenen Information assoziiert ist und Peers (3) des Peer-to-Peer-Netzwerks aufnimmt,
an das Knotenverzeichnis (6) des Overlay-Netzwerks (4) und an vom Knotenverzeichnis des Peer-to-Peer-Netzwerks (2) aufgenommene Peers (3) des Peer-to-Peer-Netzwerks die Adresse innerhalb des Peer-to-Peer-Netzwerks von mindestens einem gesteuerten Client (10) gesendet wird, um somit die Verbindung von mindestens einem Peer (3) des Peer-to-Peer-Netzwerks (2) mit dem gesteuerten Client (10) zu ermöglichen, und
über den gesteuerten Client (10), mit dem mindestens ein Peer (3) des Netzwerks verbunden ist, Angaben in Bezug auf den verbundenen Peer erhalten werden.

2. Verfahren nach Anspruch 1, bei dem das Peer-to-Peer-Netzwerk (2) dezentralisiert ist und bei dem mindestens ein mit der vorgegebenen Information assoziiertes Knotenverzeichnis (6) des Overlay-Netzwerks (4) des Peer-to-Peer-Netzwerks (2) gesucht wird und in dem mindestens ein mit der vorgegebenen Information assoziiertes und Peers (3) des Peer-to-Peer-Netzwerks aufnehmendes Knotenverzeichnis des Peer-to-Peer-Netzwerks (2) gesucht wird und bei dem die Adresse innerhalb des Peer-to-Peer-Netzwerks (2) von mindestens einem gesteuerten Client (10) an die aufgenommenen Peers gesendet wird.

3. Verfahren nach Anspruch 1 oder 2, bei dem mindestens ein mit der vordefinierten Information assoziiertes und Peers des Peer-to-Peer-Netzwerks aufnehmendes Knotenverzeichnis des Peer-to-Peer-Netzwerks gesucht wird und bei dem die Adresse innerhalb des Peer-to-Peer-Netzwerks (2) von mindestens einem gesteuerten Client (10) an die aufgenommenen Peers gesendet wird

4. Verfahren nach einem der vorhergehenden Ansprüche, bei dem die vordefinierte Information eine Kennzeichnung eines innerhalb des Peer-to-Peer-Netzwerks (2) verteilten oder zu verteilenden Inhalts und/oder eine Adresse eines Peers (3) innerhalb des Peer-to-Peer-Netzwerks (2) umfasst, wobei die vordefinierte Information vorzugsweise eine Kennzeichnung eines numerischen Audio- und/oder Videoinhalts umfasst.

5. Verfahren nach dem vorhergehenden Anspruch, bei dem die vom gesteuerten Client (10) erhaltenen Angaben eine Kennzeichnung eines numerischen Inhalts und/oder der Prozentangabe umfassen, zu der der Inhalt bereits vom Peer (3), mit dem der gesteuerte Client (10) verbunden ist, geladen wurde.

6. Verfahren nach einem der vorhergehenden Ansprüche, bei dem die vom gesteuerten Client (10) empfangenen Angaben eine Kennzeichnung des Peers (3), mit dem er verbunden ist, und/oder die Version des Austauschprogramms des Peers umfassen.

7. Verfahren nach Anspruch 2, bei dem das Overlay-Netzwerk (4) eine verteilte Hash-Tabelle (Distributed Hash Table) erstellt und bei dem das mit der vordefinierten Information assoziierte Knotenverzeichnis (6) ein mit der Information assoziierter interner Tracker ist.

8. Verfahren nach dem vorhergehenden Anspruch, bei dem an den internen Tracker (6) die Adresse innerhalb des Peer-to-Peer-Netzwerks (2) eines gesteuerten Clients (10) kommuniziert wird, sodass Peers (3) des Peer-to-Peer-Netzwerks (2) diese Adresse beim internen Tracker (6) wiedererhalten können, um sich mit dem gesteuerten Client (10) zu verbinden.

9. Verfahren nach Anspruch 7 oder 8, bei dem das Knotenverzeichnis des Peer-to-Peer-Netzwerks (2) ein mit der vordefinierten Information assoziierter Tracker ist und bei dem die Liste der Peers (3) des Netzwerks, die von letzterem als mit der vordefinierten Information assoziiert aufgenommen wurden, beim Tracker wiedererhalten werden und bei dem eine Verbindung mit mindestens einem der Peers (3) eingerichtet wird.

10. Verfahren nach dem vorhergehenden Anspruch, bei dem von mindestens einem Peer (3) der beim Tracker wiedererlangten Liste, mit dem eine Verbindung eingerichtet worden ist, eine Liste von Peers (3) des Peer-to-Peer-Netzwerks erhalten wird und bei dem an den Peer (3) die Adresse innerhalb des Peer-to-Peer-Netzwerks (2) von mindestens einem gesteuerten Client (10) vorzugsweise gemäß der Technik Peer-Exchange gesendet wird.

11. Verfahren nach dem vorhergehenden Anspruch, bei dem nach Erhalt der Liste von Peers (3) und Senden der Adresse des gesteuerten Clients (10) an den Peer (3) die Verbindung des Peers aufgehoben wird.

12. Verfahren nach einem der vorhergehenden Ansprüche, bei dem die Adresse innerhalb des Peer-to-Peer-Netzwerks (2) des gesteuerten Clients (10) die IP-Adresse und den Port des gesteuerten Clients (10) umfasst.

13. Verfahren zum Verlangsamen oder sogar Stoppen der illegalen Verbreitung von geschützten Daten innerhalb eines Peer-to-Peer-Netzwerks (2), wobei das Netzwerk (2) mindestens einen Peer (3) umfasst, der ein Austauschprogramm ausführt, das zur Verteilung von Daten an mindestens einen Client gemäß eidem ausgewählten Austauschprotokoll eingerichtet ist, das dem Peer die Ausführung einer Auswahl von Clients ermöglicht, an die Daten zu übertragen sind, wobei diese Auswahl von einer oder mehreren charakteristischen Eigenschaften von Clients abhängt, bei dem:
das Verfahren zum Sammeln von Angaben gemäß einem der Ansprüche 1 bis 12 in Gang gesetzt wird, wobei die vorgegebene Information ein numerischer Audio- und/oder Videoinhalt ist, und
der gesteuerte Client (10) in Abhängigkeit von dem vom Peer (3) ausgeführten Austauschprogramm an den oder die Peers (3), mit dem er verbunden ist, eine gegen die Verbreitung gerichtete Mitteilung sendet, insbesondere eine Falschinformation in Bezug auf den gesuchten Inhalt wie etwa eine Mitteilung der Nichtexistenz des Inhalts innerhalb des Peer-to-Peer-Netzwerks (2).

14. Informatiksystem (7), das zum Sammeln von Angaben über Peers (3) eines Peer-to-Peer-Netzwerks (2) ausgerichtet ist, in dem mindestens ein Peer (3) ein Austauschprogramm ausführt, das zum Verteilen von Daten an mindestens einen Client gemäß einem ausgewählten Austauschprogramm eingerichtet ist, das dem Peer die Ausführung einer Auswahl von Clients, an die die Daten zu übertragen sind, ermöglicht, wobei die Auswahl von Daten abhängt, die eine oder mehrere charakteristische Eigenschaften von Clients repräsentieren,
wobei das Informatiksystem (7) mindestens einen gesteuerten Client (10) umfasst und dazu eingerichtet ist:
mindestens ein Knotenverzeichnis (6) eines Overlay-Netzwerks (4) des Peer-to-Peer-Netzwerks (2) zu suchen, wobei das Knotenverzeichnis (6) mit mindestens einer vordefinierten Information und mindestens einem Knotenverzeichnis des Peer-to-Peer-Netzwerks (2) assoziiert ist, wobei das Knotenverzeichnis mit der vordefinierten Information assoziiert ist und Peers (3) des Peer-to-Peer-Netzwerks aufnimmt,
an das Knotenverzeichnis (6) des Overlay-Netzwerks (4) und an die vom Knotenverzeichnis des Peer-to-Peer-Netzwerks aufgenommenen Peers des Netzwerks (2) die Adresse innerhalb des Peer-to-Peer-Netzwerks von mindestens einem gesteuerten Client (10) zu senden, um damit die Verbindung von mindestens einem Peer (3) des Peer-to-Peer-Netzwerks mit dem gesteuerten Client (10) zu ermöglichen, und
über den gesteuerten Client (10), mit dem mindestens ein Peer (3) des Netzwerks (2) verbunden ist, Angaben in Bezug auf den verbundenen Peer zu empfangen.

15. Computerprogrammprodukt, umfassend Anweisungen, die von einem mindestens einen Mikroprozessor umfassenden Informatiksystem (7) lesbar sind, wobei die Anweisungen den Betrieb des Informatiksystems (7) so bestimmen, dass innerhalb eines Peer-to-Peer-Netzwerks (2), das mindestens einen Peer (3) umfasst, der ein Austauschprogramm ausführt, das dazu eingerichtet ist, mindestens einen Client gemäß einem ausgewählten Austauschprotokoll zu bedienen, das dem Knoten eine Auswahl von bedienten Clients in Abhängigkeit von mindestens einer charakteristischen Eigenschaft der Clients ermöglicht:
mindestens ein Knotenverzeichnis (6) eines Overlay-Netzwerks (4) des Peer-to-Peer-Netzwerks (2) gesucht wird, wobei das Knotenverzeichnis (6) mit mindestens einer vordefinierten Information assoziiert ist und mindestens ein Knotenverzeichnis des Peer-to-Peer-Netzwerks (2) gesucht wird, wobei das Knotenverzeichnis mit der vordefinierten Information assoziiert ist und Peers (3) des Peer-to-Peer-Netzwerks (2) aufnimmt,
die Adresse innerhalb des Peer-to-Peer-Netzwerks (2) von mindestens einem gesteuerten Client (10) an das Knotenverzeichnis (6) des Overlay-Netzwerks (4) und an die vom Knotenverzeichnis des Peer-to-Peer-Netzwerks aufgenommenen Peers (3) des Netzwerks (2) gesendet wird, sodass die Verbindung von mindestens einem Peer (3) des Peer-to-Peer-Netzwerks mit dem gesteuerten Client (10) ermöglicht wird, und
der gesteuerte Client (10), mit dem mindestens ein Peer (3) des Netzwerks (2) verbunden ist, Angaben in Bezug auf den verbundenen Peer (3) empfängt.

## Claims

1. Method of collecting information concerning peers (3) for a peer-to-peer network (2), the network (2) comprising at least one peer (3) running exchange software configured to broadcast data to at least one client according to a selective exchange protocol enabling the peer to apply a selection of the clients to which the data are transferred, this selection being made on the basis of one or more characteristics of the clients,
method in which:
- is searched:
- at least one directory node (6) of an overlay network (4) overlaying said peer-to-peer network (2), said directory node (6) being associated with at least one predefined information item,
and
- at least one directory node of the peer-to-peer network (2), said directory node being associated with said predefined information item and listing peers (3) of the peer-to-peer network,
- the address in the peer-to-peer network of at least one controlled client (10) is sent to the directory node (6) of the overlay network (4) and to the peers (3) of the peer-to-peer network listed by the directory node of the peer-to-peer network (2), so as to enable at least one peer (3) of the peer-to-peer network (2) to connect to said controlled client (10), and,
- information relating to said connected peer is received via the controlled client (10) to which at least one peer (3) of the network is connected.

2. The method as claimed in claim 1, in which the peer-to-peer network (2) is decentralized and in which a search is conducted to find at least one directory node (6) of the overlay network (4) overlaying the peer-to-peer network (2) associated with said predefined information item and in which the address in the peer-to-peer network (2) of at least one controlled client (10) is sent to said directory node (6).

3. The method as claimed in claim 1 or 2, in which a search is conducted to find at least one directory node of the peer-to-peer network (2) associated with said predefined information item and listing peers (3) of the peer-to-peer network, and in which the address in the peer-to-peer network (2) of at least one controlled client (10) is sent to the listed peers.

4. The method as claimed in any one of the preceding claims, in which the predefined information item comprises at least one out of an identifier of a content that has been or is to be broadcast in the peer-to-peer network (2) and an address of a peer (3) in the peer-to-peer network (2), the predefined information item preferably comprising an identifier of a digital audio and/or video content.

5. The method as claimed in the preceding claim, in which the information received by the controlled client (10) comprises an identifier of the digital content and/or the percentage of said content already downloaded by the peer (3) to which the controlled client (10) is connected.

6. The method as claimed in any one of the preceding claims, in which the information received by the controlled client (10) comprises an identifier of the peer (3) to which it is connected and/or the version of the exchange software of said peer.

7. The method as claimed in claim 2, in which the overlay network (2) implements a distributed hash table and in which the directory node (6) associated with the predefined information item is an internal tracker associated with said information item.

8. The method as claimed in the preceding claim, in which the address in the peer-to-peer network (2) of a controlled client (10) is communicated to the internal tracker (6), so that peers (3) of the peer-to-peer network (2) can recover this address from the internal tracker (6) to connect to the controlled client (10).

9. The method as claimed in claim 7 or 8, in which the directory node of the peer-to-peer network (2) is a tracker associated with the predefined information item and in which the list of the peers (3) of the network listed by the latter as associated with the predefined information item are recovered from this tracker, and in which a connection is made to at least one of said peers (3).

10. The method as claimed in the preceding claim, in which a list of peers (3) of the peer-to-peer network is received from at least one peer (3) of the list recovered from the tracker, and in which the address in the peer-to-peer network (2) of at least one controlled client (10) is sent to said peer (3) according to the peer exchange technique.

11. The method as claimed in the preceding claim, in which, after reception of the list of peers (3) and after sending the address of the controlled client (10) to said peer (3), the connection to said peer is disconnected.

12. The method as claimed in any one of the preceding claims, in which the address in the peer-to-peer network (2) of the controlled client (10) comprises the IP address and the port of the controlled client (10).

13. A method for slowing down, even eliminating, the illegal propagation of protected data in a peer-to-peer network (2), the network (2) comprising at least one peer (3) running an exchange software configured to broadcast data to at least one client according to a selective exchange protocol enabling the peer to apply a selection of the clients to which the data are transferred, this selection being made on the basis of one or more characteristics of the clients, in which:
- the method of collecting information as claimed in any one of claims 1 to 12 is implemented, the predefined information item being a digital audio and/or video content, and
- according to the exchange software run by the peer (3), the controlled client (10) sends to the peer(s) (3) to which it is connected a message opposing said propagation, especially a false information item relating to said sought content, as a message of non-existence of said content in the peer-to-peer network (2).

14. An information technology system (7) intended to collect information concerning peers (3) for a peer-to-peer network (2), in which at least one peer (3) runs exchange software configured to broadcast data to at least one client according to a selective exchange protocol enabling the peer to apply a selection of the clients to which the data are transferred, this selection being made on the basis of data representative of one or more characteristics of the clients,
the information technology system (7) comprising at least one controlled client (10) and being configured to:
- search for at least one directory node (6) of an overlay network (4) overlaying said peer-to-peer network (2), said directory node (6) being associated with at least one predefined information item and at least one directory node of the peer-to-peer network (2), said directory node being associated with said predefined information item and listing peers (3) of the peer-to-peer network,
- send to the directory node (6) of the overlay network (4) and to the peers of the network (2) listed by the directory node of the peer-to-peer network the address in the peer-to-peer network of at least one controlled client (10) so as to enable at least one peer (3) of the peer-to-peer network to connect to said controlled client (10), and
- receive via the controlled client (10) to which at least one peer (3) of the network (2) is connected information relating to said connected peer.

15. A computer program product comprising instructions that can be read by an information technology system (7) comprising at least one microprocessor, these instructions controlling the operation of the information technology system (7) so that, in a peer-to-peer network (2) comprising at least one peer (3) running exchange software configured to serve at least one client according to a selective exchange protocol enabling the peer to make a selection of the clients served on the basis of at least one characteristic of these clients:
- at least one directory node (6) of an overlay network (4) overlaying said peer-to-peer network (2) is sought, said directory node (6) being associated with at least one predefined information item, and at least one directory node of the peer-to-peer network (2) is sought, said directory node being associated with said predefined information item and listing peers (3) of the peer-to-peer network (2),
- the address in the peer-to-peer network (2) of at least one controlled client (10) is sent to the directory node (6) of the overlay network (4) and to the peers (3) of the network (2) listed by the directory node of the peer-to-peer network, so as to enable at least one peer (3) of the peer-to-peer network to connect to said controlled client (10), and,
- the controlled client (10) to which at least one peer (3) of the network (2) is connected receives information relating to said connected peer (3).
